# EUROPÄISCHE PATENTSCHRIFT

(11) **EP 0 798 493 B1**
(45) Veröffentlichungstag und Bekanntmachung des Hinweises auf die Patenterteilung: **25.04.2001**
(21) Anmeldenummer: 97102070.6
(22) Anmeldetag: 10.02.1997
(51) Int. Cl.: F16H 59/02

(54) **Schalteinrichtung**
Gear shift device
Dispositif de commande de boîte de vitesses

(30) Priorität: 30.03.1996 DE 19612856
(43) Veröffentlichungstag der Anmeldung: 01.10.1997
(73) Patentinhaber: Bayerische Motoren Werke Aktiengesellschaft, 80788 München (DE)
(72) Erfinder: Biskup, Ernst, 82223 Eichenau (DE); Pflaum, Wolfgang, 85716 Unterschleissheim (DE)

(56) Entgegenhaltungen:
- EP-A- 0 365 715
- EP-A- 0 629 796
- DE-A- 3 717 675

## Beschreibung

Die Erfindung betrifft eine Schalteinrichtung gemäß dem Oberbegriff des Anspruchs 1.

Aus der DE 37 17 675 C2 ist eine gattungsgemäße Schalteinrichtung mit zwei Schaltgassen bekannt, nämlich einer Schaltgasse für die verschiedenen Automatikgetriebeprogramme und einer weiteren Schaltgasse für eine manuelle Schaltbarkeit.

Wählt der Fahrzeugbediener die manuelle Schaltbarkeit des Getriebes durch Verschwenken des Wählhebels in die zweite Schaltgasse, so ist er bei herkömmlichen Schalteinrichtungen in seinem Bewegungsablauf bezüglich eines Hoch- und Rückschaltvorganges festgelegt. Bei einer herkömmlichen Ausführungsform einer solchen Schalteinrichtung wird in der Regel ein Hochschaltvorgang durch Betätigung des Wählhebels nach vorne ("+") durchgeführt, wohingegen beim Rückschaltvorgang der Wählhebel nach hinten gezogen werden muß ("-").

Bei Fahrzeugen mit sequentieller Schaltung (Handschaltgetriebe) sind die Lagen der Hoch- und Rückschaltpositionen gemischt. Tendenziell ist aber die Bewegungsrichtung für den Hochschaltvorgang in Fahrtrichtung nach hinten, für den Rückschaltvorgang nach vorne gerichtet.

Das Schaltbild hängt primär von dem subjektiven Empfinden und daher auch von den Gewohnheiten des Fahrers ab. In einer Gesamtbetrachtung ist bei automatisierten Handschaltgetrieben mit sequentieller Schaltung mit steigender Motorisierung eine bestimmte Ausrichtung zu erkennen, und zwar ein Hochschaltvorgang in Fahrtrichtung nach hinten und ein Rückschaltvorgang in Fahrtrichtung nach vorne. Der Grund hierfür liegt in der Körperbewegung während des Beschleunigungsvorgangs. Der Körper wird nach hinten in die Sitze gedrückt, während mit gleicher Bewegungsrichtung der nächsthöhere Gang einlegt wird. Bei einem Hochschaltvorgang gleich der Fahrtrichtung müßte der Fahrer entgegen seiner Bewegungsrichtung den Gang einlegen.

Aufgabe der Erfindung ist es, eine Schalteinrichtung der eingangs genannten Art dahingehend zu verbessern, daß eine individuelle Betätigung des Wählhebels beim manuellen Hoch- und Rückschalten je nach Wunsch des Fahrers bereitgestellt werden kann.

Diese Aufgabe wird durch die im Anspruch 1 genannten Merkmale gelöst.

Demgemäß ist die Zuordnung der Bewegungsrichtung des Wählhebels in der zweiten Schaltgasse, also bei manuellem Schaltbetrieb des Getriebes, zu einem Hoch- bzw. Rückschaltvorgang je nach Wunsch einstellbar.

Je nach Wunsch kann nun durch die erfindungsgemäß ausgebildete Schalteinrichtung ein Hochschaltvorgang in Fahrtrichtung nach vorne oder nach hinten und entsprechend ein Rückschaltvorgang in der entgegengesetzten Richtung erfolgen.

Der Fahrzeugbediener soll vorzugsweise selbst entscheiden können, wie er das Getriebe belegt haben möchte. Dadurch ist eine individuelle Berücksichtigung eines jeden Kundenwunsches möglich.

Gemäß einer vorteilhaften Ausführungsform der Erfindung ist die gewünschte Zuordnung der Bewegungsrichtung in einer Getriebesteuereinrichtung abgelegt. Dies kann durch entsprechende Ausgestaltung der im Getriebesteuerprogramm bereits vorhandenen Software auf einfache Weise realisiert werden. Durch eine kleine Änderung in der Software kann dann je nach Fahrerwunsch die Zuordnung der Bewegungsrichtung des Wählhebels zum jeweiligen Schaltvorgang erreicht werden.

Um eine Fehlbedienung auszuschließen, sollte die Einstellung der Zuordnung, also die Änderung der Bewegungsrichtung des Wählhebels zu den entsprechenden Hoch- bzw. Rückschaltvorgängen nur werksseitig oder werkstattseitig möglich sein.

Gemäß einer alternativen Ausführungsform ist die Einstellung individuell aufgrund eines Identifikationshinweises auf den momentanen Fahrzeugbediener vornehmbar. Ein solcher Identifikationshinweis kann beispielsweise durch eine besondere Kennzeichnung oder Codierung des Fahrzeugschlüssels gegeben sein oder durch eine Identifikationskarte.

Die Erfindung wird im folgenden anhand der beigefügten Zeichnungen erläutert, in denen in
- Fig. 1: ein eine Schaltbetätigungsvorrichtung enthaltender Ausschnitt aus dem Innenraum eines Kraftfahrzeugs dargestellt ist und in
- Fig. 2: eine Leuchtpunkt-Wählpositionsanzeige mit einem Schaltschema dargestellt ist.

Die Erfindung ist anwendbar bei automatischen Getrieben, wie automatische Stufengetriebe, stufenlose Getriebe oder bei automatisierten Schaltgetrieben.

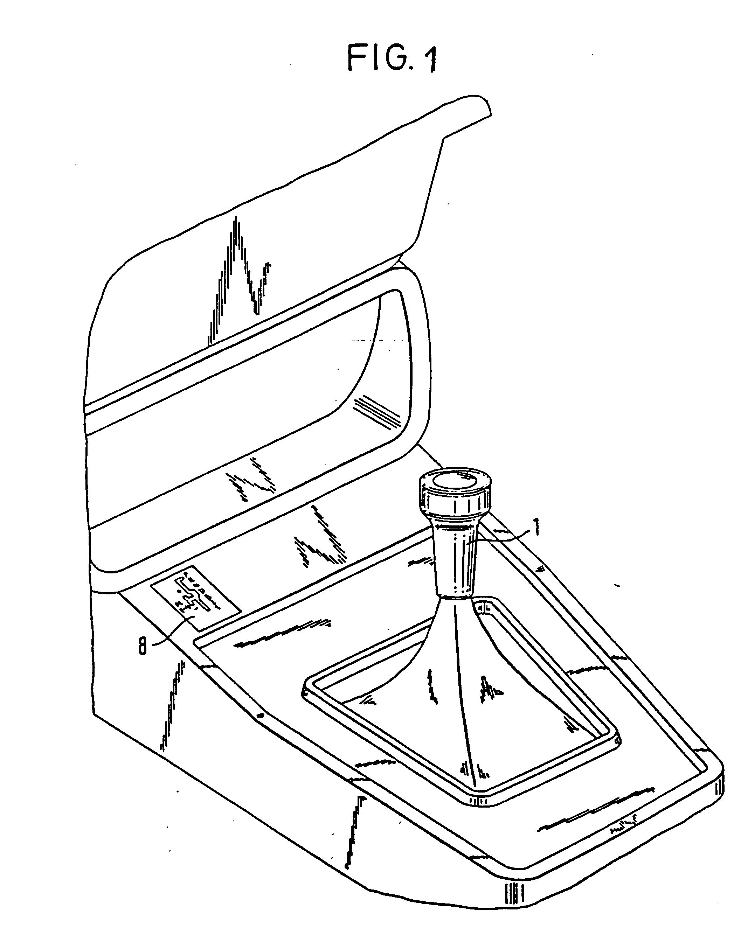

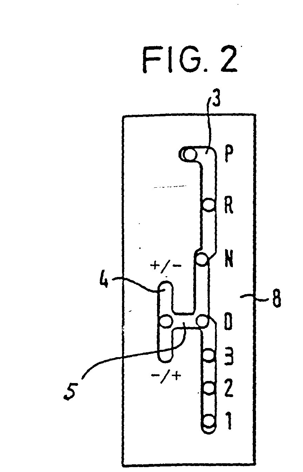

Die Fig. 1 zeigt einen eine Schaltbetätigungsvorrichtung enthaltenden Ausschnitt aus dem Innenraum eines Kraftfahrzeugs. Am linken Rand der Konsole ist eine Leuchtpunkt-Wählpositionsanzeige 8 mit einem Schaltschema dargestellt. Ein Wählhebel 1 ist um seinen Drehpunkt (nicht dargestellt) kardangelenkartig schwenkbar gelagert. Im Bereich seines unteren Endes befindet sich eine horizontale Schaltkulisse (nicht dargestellt), die der Leuchtpunkt-Wählpositionsanzeige 8 derart entspricht, daß sich der Wählhebel 1 in der vorgegebenen Weise schalten läßt. Gemäß Fig. 2 umfaßt die Schaltkulisse zwei Schaltgassen 3 und 4. In der ersten Schaltgasse der Automatikschaltgasse ist die übliche Anordnung der einzelnen Wählhebel-Schaltpositionen für die zugeordneten Automatikgetriebeprogramme zu erkennen; die erste Schaltgasse enthält die Schaltpositionen "P"; "R"; "N"; "D"; "3"; "2"; "1".

In Bild 2 ist durch einen Kreis eine Position in der zweiten Schaltgasse 4 angegeben, in der sich der Wählhebel, sobald er sich in dieser Schaltgasse befindet - in seiner Neutralposition steht. Durch Betätigen des Wählhebels 1 nach vorne bzw. zurück kann ein manueller Hoch- bzw. Rückschaltvorgang durchgeführt werden.

Gemäß einer ersten Zuordnung der Bewegungsrichtung des Wählhebels 1 wird durch eine Bewegung des Wählhebels 1 nach vorne (dabei bedeutet die Richtung im Bild nach oben die Vorwärtsrichtung des Fahrzeugs) ein Hochschaltvorgang durchgeführt. Dies ist durch ein Plus-Zeichen angedeutet, welches am oberen Ende der zweiten Schaltgasse 4 links vom Schrägstrich angeordnet ist.

Im Gegenzug veranlaßt ein Zurückziehen des Wählhebels 1 das Getriebe zu einem Rückschaltvorgang. Dies ist in Fig. 2 durch das am unteren Ende der zweiten Schaltgasse 4, links vom Schrägstrich angefügte Minus-Zeichen gekennzeichnet.

Demgegenüber ist aber auch noch eine zweite Zuordnung je nach Fahrerwunsch einstellbar. Dies wird durch die Zeichen (+, -) jeweils rechts vom Schrägstrich am oberen und unteren Ende der zweiten Schaltgasse 4 angedeutet. Entsprechend dieser Einstellung kehrt sich die Bewegungsrichtung des Wählhebels 1 gegenüber der vorbeschriebenen Alternative gerade um, so daß nunmehr der Rückschaltvorgang durch Bewegung des Wählhebels 1 nach vorne (also in Fahrtrichtung) und ein Hochschaltvorgang durch Bewegung des Wählhebels 1 nach hinten erfolgt.

Der Wählhebel 1 erzeugt bei seiner Bewegung nach vorne bzw. nach hinten entsprechende Impulse, welche an eine elektronische Getriebesteuerung (nicht dargestellt) weitergeleitet werden. Entsprechend einem Programm in dieser elektronischen Getriebesteuerung werden die durch die Bewegung des Wählhebels verursachten Signale gemäß einer jeweiligen Einstellung gewertet und in entsprechende Schaltvorgänge umgesetzt. Da die Einstellung, d. h. die Auswertung der ankommenden Schaltsignale rein softwaremäßig erfolgen kann, ist eine Änderung der Einstellung durch eine bloße Softwareänderung möglich. Natürlich können auch Schalter vorgesehen sein, durch deren Betätigung eine Änderung der Zuordnung der Bewegungsrichtung des Wählhebels zu den entsprechenden Schaltvorgängen möglich ist.

Eine Änderung dieser Einstellung ist am vorgenannten Beispiel nur werksseitig möglich, d. h. sie wird je nach Käuferwunsch einmalig eingestellt.

Natürlich ist es auch möglich, die Schalteinrichtung so zu gestalten, daß eine Änderung der jeweiligen Zuordnung auch werkstattseitig möglich ist. Bei einer solche Realisierung sollen jedoch Vorkehrungen getroffen werden, daß eine Fehlbedienung ausgeschlossen werden kann.

Da in der Zukunft häufiger mit Identifikationsmitteln zu rechnen ist, welche den jeweiligen Fahrzeugbediener ausweisen können, ist es alternativ auch möglich, aufgrund eines solchen Identifikationshinweises eine entsprechende Zuordnung der Bewegung des Wählhebels zu den entsprechenden Hoch- und Rückschaltvorgängen vorzunehmen. Solche Identifikationsmittel können beispielsweise Zündschlüssel sein, die in entsprechender Weise ausgestaltet oder codiert sind. Insbesondere eignet sich dazu ein Schlüssel, welcher mit einem Transponder versehen ist. Denkbar ist auch die Verwendung einer Identifikationskarte, welche beispielsweise einen Mikrochip aufweisen kann, in dem bedienerspezifische Daten gespeichert sein können. Je nach Fahrzeugbediener läßt sich dann individuell die Zuordnung der Bewegungsrichtung des Wählhebels zu den entsprechenden Schaltvorgängen automatisch einstellen.

Die vorliegende Erfindung stellt eine kostengünstige und einfache Maßnahme dar, einen individuellen Fahrerwunsch hinsichtlich der Betätigung eines Wählhebels beim Schalten zu berücksichtigen.

## Patentansprüche

1. Schalteinrichtung für ein durch eine elektronische Steuereinheit gesteuertes automatisches Getriebe oder für ähnliche automatisierte. Schaltgetriebe eines Kraftfahrzeugs, wobei die Schalteinrichtung einen Wählhebel (1) aufweist, der in einer ersten Schaltgasse (3) zur Einstellung von Automatikgetriebeprogrammen verschwenkbar ist und der über eine Quergasse (5) in eine zweite Schaltgasse (4) umschaltbar ist, in der durch Verschwenken des Wählhebels (1) die Vorwärtsgänge des Getriebes manuell hoch- und rückschaltbar sind,
dadurch gekennzeichnet, daß die Zuordnung der Bewegungsrichtung des Wählhebels (1) in der zweiten Schaltgasse (4) zu einem Hochbzw. Rückschaltvorgang je nach Fahrerwunsch einstellbar ist.

2. Schalteinrichtung nach Anspruch 1,
dadurch gekennzeichnet, daß die gewünschte Zuordnung der Bewegungsrichtung des Wählhebels (1) in einer Getriebesteuereinrichtung abgelegt ist.

3. Schalteinrichtung nach Anspruch 1 oder 2,
dadurch gekennzeichnet, daß die Einstellung nur werkstatt- oder werksseitig vornehmbar ist.

4. Schalteinrichtung nach Anspruch 1 bis 2,
dadurch gekennzeichnet, daß die Einstellung individuell aufgrund eines Identifikationshinweises auf den momentanen Fahrzeugbediener vornehmbar ist.

5. Schalteinrichtung nach einem der Ansprüche 1 bis 4,
dadurch gekennzeichnet, daß als automatisches Getriebe ein Stufengetriebe, stufenloses Getriebe oder anderes automatisiertes Schaltgetriebe verwendet ist.

## Claims

1. A gear shift device for an automatic gearbox controlled by an electronic control unit or for similar automated shift gearboxes in a motor vehicle, in which the gear shift device has a selector lever (1) which can be moved within a first shift gate (3) for setting automatic gear shift programs and which can be moved via a cross gate (5) into a second gear shift gate (4), in which the forward gears of the gear box can be shifted upward or downward manually by moving the selector lever (1),
characterised in that the allocation of the direction of movement of the selector lever (1) in the second gear shift gate (4) can be set to an upward shift or a downward shift process according to the wishes of the driver.

2. A gear shift device according to Claim 1,
characterised in that the desired allocation of the direction of movement of the selector lever (1) is stored in a gearbox control unit.

3. A gear shift device according to Claim 1 or Claim 2,
characterised in that the setting can only be undertaken in the factory or in a workshop.

4. A gear shift device according to Claim 1 to Claim 2,
characterised in that the setting can be individually established based on a means of identification for the current vehicle user.

5. A gear shift device according to one of the Claims 1 to 4,
characterised in that a stepped shift gearbox, a continuously variable gearbox or other automated shift gearbox is used as the automatic gearbox.

## Revendications

1. Installation de commutation d'une boîte de vitesses automatique commandée par une unité de commande électronique ou d'une boîte à commutation automatisée, analogue, équipant un véhicule automobile, cette installation de commutation comprenant un levier sélecteur (1) qui peut se déplacer dans un premier couloir de commutation (3) pour régler les programmes de la boîte de vitesses automatique, et qui peut être basculé par un couloir transversal (5) dans un second couloir de commutation (4) dans lequel, par basculement du levier sélecteur (1) on peut commuter manuellement les rapports de marche avant de la boîte de vitesses, dans le sens ascendant et descendant,
caractérisée en ce que
l'association du sens de déplacement du levier sélecteur (1) dans le second couloir de commutation (4) se règle selon le souhait du conducteur pour une commutation dans le sens ascendant ou dans le sens descendant.

2. Installation selon la revendication 1,
caractérisée en ce que
l'association souhaitée du sens de déplacement du levier sélecteur (1) est enregistrée dans l'installation de commande de la boîte de vitesses.

3. Installation selon la revendication 1 ou 2,
caractérisée en ce que
le réglage n'est possible qu'en atelier ou en usine.

4. Installation selon la revendication 1 et 2,
caractérisée en ce que
le réglage se fait individuellement à l'aide d'un élément d'identification correspondant à l'utilisateur instantané du véhicule.

5. Installation selon l'une des revendications 1 à 4,
caractérisée en ce que
la boîte automatique est une boîte à rapports, une boîte continue, ou autre boîte à commutation automatique.
